# FASCICULE DE BREVET EUROPEEN

(11) **EP 3 317 345 B1**
(45) Date de publication et mention de la délivrance du brevet: **07.08.2019**
(21) Numéro de dépôt: 16734357.3
(22) Date de dépôt: 30.06.2016
(51) Int. Cl.: C08L 9/06, B60C 1/00, C08K 5/17

(54) **COMPOSITION DE CAOUTCHOUC COMPRENANT UNE RESINE HYDROCARBONEE DE FAIBLE TEMPERATURE DE TRANSITION VITREUSE, UN AGENT DE COUPLAGE SPECIFIQUE ET UNE AMINE PRIMAIRE**
KAUTSCHUKZUSAMMENSETZUNG ENTHALTEND EIN KOHLENWASSERSTOFFHARZ MIT NIEDRIGER GLASÜBERGANSGTEMPERATUR, VERNETZUNGSMITTEL UND PRIMÄRES AMINE
RUBBER COMPOSITION COMPRISING HYDROCARBON RESIN HAVING LOW GLASS TRANSITION TEMPERATURE, COUPLING AGENT AND PRIMARY AMINE

(30) Priorité: 02.07.2015 FR 1556232
(43) Date de publication de la demande: 09.05.2018
(73) Titulaire: Compagnie Générale des Etablissements Michelin, 63000 Clermont-Ferrand (FR)
(72) Inventeur: VARAGNIAT, Franck, 63040 Clermont-Ferrand Cedex 9 (FR)
(74) Mandataire: Sidhu, Alban
(86) Numéro de dépôt international: PCT/EP2016/065404
(87) Numéro de publication internationale: WO 2017/001614

(56) Documents cités:
- WO-A1-2013/092523

## Description

L'invention est relative aux compositions, notamment pour pneumatiques et plus particulièrement aux compositions pour bande de roulement.

Depuis que les économies de carburant et la nécessité de protéger l'environnement sont devenues une priorité, il s'est avéré nécessaire de produire des pneumatiques ayant une résistance au roulement réduite, sans pénalisation des autres propriétés du pneumatique. Les manufacturiers ont développé des compositions de pneumatique permettant de diminuer cette résistance au roulement, notamment par l'introduction de silice comme charge renforçante, ou de résine de haute température de transition vitreuse comme plastifiant.

Par exemple, les Demanderesses ont déjà décrit l'utilisation de résines de haute Tg, comme décrit dans les documents WO-2005/087859 ou WO-2006/061064.

Quelques documents décrivent l'utilisation de résines de faible Tg, comme par exemple dans le document JP-2005213486 qui propose l'utilisation de résine de faible Tg à un taux compris entre 0,5 et 5 pce pour améliorer le collant à cru et la faisabilité industrielle des compositions. Le document US-2007/0167557 propose l'utilisation de résine de faible Tg à un taux de 10 pce pour améliorer la résistance à l'écaillement. Quant au document JP-2001144262, il décrit des compositions dont la résistance à l'abrasion et l'adhérence sont améliorées, et qui comprennent des résines de faible Tg.

Par ailleurs, le document WO-2014/180673 décrit l'utilisation d'une amine primaire pour diminuer l'hystérèse des compositions de caoutchouc diénique comportant de la silice comme charge renforçante majoritaire.

Néanmoins, les manufacturiers cherchent toujours des solutions pour améliorer en même temps toutes les performances des compositions pour pneumatique et notamment la résistance au roulement, en même temps que la viscosité des compositions crues, associée à la facilité de mise en oeuvre industrielle des compositions (processabilité).

A présent, les Demanderesses ont montré que des compositions particulières comprenant de la silice comme charge majoritaire, un agent de couplage spécifique, une résine plastifiante de faible Tg et une amine primaire, permettaient d'avoir un compromis amélioré entre de plusieurs performances recherchées pour les compositions de pneumatique, notamment la résistance au roulement, en même temps que la viscosité des compositions crues.

L'invention concerne donc une composition de caoutchouc à base d'au moins un élastomère diénique, 50 à 160 pce (parties en poids pour cent parties en poids d'élastomère) de charge renforçante inorganique, un système de vulcanisation, un système plastifiant comprenant au moins une résine hydrocarbonée de température de transition vitreuse (Tg) comprise entre -40°C et 20°C, comme agent de couplage, un polysulfure d'hydroxysilane répondant à la formule générale (I) :

(HO)ₐR₍₃₋ₐ₎Si-R'-Sₓ-R'-SiR_{(3-b)}(OH)_{b} (I)

dans laquelle les radicaux R, identiques ou différents, sont des groupes hydrocarbonés comportant de préférence de 1 à 15 atomes de carbone; les radicaux R', identiques ou différents, sont des groupes de liaison divalents comportant de préférence de 1 à 18 atomes de carbone; a et b, identiques ou différents, sont égaux à 1 ou 2; x est un nombre supérieur ou égal à 2, et une amine primaire de formule (IV):

R-NH₂ (IV)

dans laquelle R représente un groupement hydrocarboné linéaire ou ramifié comprenant de 8 à 24 atomes de carbone, ladite composition étant dépourvue ou comprenant moins de 0,5 pce de dérivé guanidique.

Préférentiellement, l'invention concerne une composition telle que définie ci-dessus, dans laquelle ledit élastomère diénique est choisi dans le groupe constitué par les polybutadiènes, les polyisoprènes de synthèse, le caoutchouc naturel, les copolymères de butadiène, les copolymères d'isoprène et les mélanges de ces élastomères. De préférence, ledit élastomère diénique est choisi dans le groupe constitué par les polybutadiènes, les copolymères de butadiène et de styrène, et les mélanges de ces élastomères.

Préférentiellement également, l'invention concerne une composition telle que définie ci-dessus, dans laquelle la charge renforçante est choisie dans le groupe constitué par les silices, les noirs de carbone et les mélanges de ces derniers. Préférentiellement, le taux de charge renforçante inorganique est compris dans un domaine allant de 50 à 160 pce. De préférence, la charge renforçante inorganique est de la silice. De préférence également, le taux de silice est compris dans un domaine allant de 50 à 150 pce, de préférence de 60 à 150 pce. Préférentiellement, la charge renforçante majoritaire est de la silice, de préférence à un taux compris dans un domaine allant de 120 à 150 pce, de préférence de 130 à 150 pce.

Préférentiellement également, l'invention concerne une composition telle que définie ci-dessus, qui comprend, à titre minoritaire, du noir de carbone, préférentiellement à un taux compris dans un domaine entre 0 et 50 pce.

De préférence, l'invention concerne une composition telle que définie ci-dessus, dans laquelle le taux d'agent de couplage est compris entre 2 et 15 pce, plus préférentiellement entre 3 et 13, mieux, entre 5 et 10 pce.

Préférentiellement, l'invention concerne une composition telle que définie ci-dessus, dans laquelle l'agent de couplage de formule (I) est un mono-hydroxysilane dans lequel a et b sont égaux à 1. De préférence, l'agent de couplage de formule (I) est tel que les radicaux R sont choisis parmi les alkyles en C1-C6, les cycloalkyles en C5-C8 ou un radical phényle ; les radicaux R' sont choisis parmi les alkylènes en C1-C18 ou les arylènes en C6-C12. De préférence également, l'agent de couplage de formule (I) est tel que les radicaux R sont choisis parmi les alkyles en C1-C6 et les radicaux R' parmi les alkylènes en C1-C10. Préférentiellement, l'agent de couplage de formule (I) est un polysulfure de mono-hydroxysilane de formule (II): 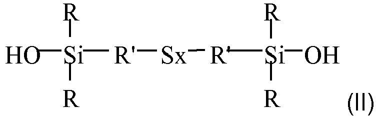 dans laquelle les radicaux R sont des alkyles en C₁-C₃, de préférence le méthyle ; les radicaux R' des alkylènes en C₁-C₄, de préférence méthylène, éthylène ou propylène ; x est supérieur ou égal à 2. Plus préférentiellement, l'agent de couplage de formule (I) un polysulfure de bis- (propyldiméthylsilanol) de formule particulière (III):

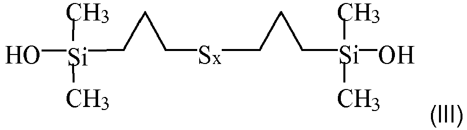

Préférentiellement, l'invention concerne une composition telle que définie ci-dessus, ladite composition contenant moins de 0,45 pce de dérivé guanidique, et de préférence moins de 0,4 pce.

Préférentiellement également, l'invention concerne une composition telle que définie ci-dessus, dans laquelle le taux d'amine primaire est de 0,2 à 8 pce, de préférence de plus de 0,3 pce à 7 pce. Préférentiellement, le taux d'amine primaire est de 0,5 à 5 pce, de préférence de plus de 0,6 pce à 4 pce. De préférence, l'amine primaire de formule (IV) porte un radical R qui représente un groupement hydrocarboné comprenant de 10 à 22 atomes de carbone. Plus préférentiellement, R représente un groupement hydrocarboné comprenant de 12 à 20 atomes de carbone et de préférence de 14 à 20 atomes de carbone. De préférence, R représente un groupement hydrocarboné linéaire, de préférence un groupement alkyle ou un groupement alkényle.

De manière préférentielle, l'invention concerne une composition telle que définie ci-dessus, ladite composition étant dépourvue de zinc ou en contient moins de 0,5 pce, préférentiellement moins de 0,3 pce, plus préférentiellement moins de 0,2 pce et très préférentiellement moins de 0,1 pce.

Préférentiellement, l'invention concerne une composition telle que définie ci-dessus, dans laquelle le taux total de plastifiants est supérieur ou égal à 5 pce, de préférence compris dans un domaine allant de 10 à 120 pce, plus préférentiellement de 10 à 100 pce, mieux, de 15 à 90 pce.

Préférentiellement également, l'invention concerne une composition telle que définie ci-dessus, dans laquelle le taux de résine hydrocarbonée de Tg comprise entre -40°C et 20°C est compris dans un domaine allant de 5 à 80 pce, de préférence de 7 à 75 pce, mieux de 10 à 50 pce. De préférence, la résine hydrocarbonée précédemment mentionnée comme résine hydrocarbonée de Tg comprise entre -40°C et 20°C présente une Tg comprise entre -40°C et 0°C, plus préférentiellement entre -30°C et 0°C et plus préférentiellement encore entre -20°C et 0°C. De préférence également, la résine hydrocarbonée précédemment mentionnée comme résine hydrocarbonée de Tg comprise entre -40°C et 20°C présente une masse moléculaire moyenne en nombre inférieure à 800 g/mol, de préférence inférieure à 600 g/mol, mieux inférieure à 400 g/mol. Préférentiellement, la résine hydrocarbonée précédemment mentionnée comme résine hydrocarbonée de Tg comprise entre -40°C et 20°C présente un point de ramollissement compris dans un domaine allant de 0 à 50°C, préférentiellement de 0 à 40°C, plus préférentiellement de 10 à 40°C, de préférence de 10 à 30°C. Préférentiellement également, la résine hydrocarbonée précédemment mentionnée comme résine hydrocarbonée de Tg comprise entre -40°C et 20°C présente un indice de polymolécularité (Ip) inférieur à 3, de préférence inférieur à 2.

De manière préférée, l'invention concerne une composition telle que définie ci-dessus, qui comprend en outre dans le système plastifiant une résine hydrocarbonée de Tg supérieure à 20°C. De préférence, le taux de résine hydrocarbonée de Tg supérieure à 20°C est compris dans un domaine allant de 5 à 50 pce, de préférence de 5 à 40 pce, mieux, de 10 à 40 pce. Préférentiellement, la résine hydrocarbonée précédemment mentionnée comme résine hydrocarbonée de Tg supérieure à 20°C présente une Tg supérieure à 30°C. Préférentiellement également, la résine hydrocarbonée précédemment mentionnée comme résine hydrocarbonée de Tg supérieure à 20°C présente une masse moléculaire moyenne en nombre comprise entre 400 et 2000 g/mol, de préférence entre 500 et 1500 g/mol. Préférentiellement encore, la résine hydrocarbonée précédemment mentionnée comme résine hydrocarbonée de Tg supérieure à 20°C présente un indice de polymolécularité (Ip) inférieur à 3, de préférence inférieur à 2.

De manière préférée également, l'invention concerne une composition telle que définie ci-dessus, qui comprend en outre dans le système plastifiant une huile plastifiante. Préférentiellement, l'huile plastifiante est choisie dans le groupe constitué par les huiles naphténiques, les huiles paraffiniques, les huiles MES (Médium Extracted Solvates), les huiles TDAE (Treated Distillate Aromatic Extracts), les huiles minérales, les huiles végétales, les plastifiants éthers, les plastifiants esters, les plastifiants phosphates, les plastifiants sulfonates et les mélanges de ces composés. De préférence, le taux d'huile plastifiante est compris dans un domaine allant de 2 à 80 pce, de préférence de 5 à 60 pce.

Préférentiellement également, l'invention concerne une composition telle que définie ci-dessus, dans laquelle le rapport du taux total de charge et du taux total de plastifiant est compris dans un domaine allant de 1,5 à 5 ; de préférence de 1,6 à 4,5.

Egalement, l'invention concerne un pneumatique comprenant une composition telle que définie ci-dessus, de préférence dans tout ou partie de sa bande de roulement.

Préférentiellement, le pneumatique selon l'invention sera choisi parmi les pneumatiques destinés à équiper un véhicule à deux roues, un véhicule de tourisme, ou encore un véhicule dit « poids lourd » (c'est-à-dire métro, bus, véhicules hors-la-route, engins de transport routier tels que camions, tracteurs, remorques), ou encore des avions, des engins de génie civil, agraire, ou de manutention.

### I- Constituants de la composition

Les compositions de caoutchouc selon l'invention sont à base d'au moins un élastomère diénique, 50 à 160 pce (parties en poids pour cent parties en poids d'élastomère) de charge renforçante inorganique, un système de vulcanisation, un système plastifiant comprenant au moins une résine hydrocarbonée de température de transition vitreuse (Tg) comprise entre -40°C et 20°C, comme agent de couplage, un polysulfure d'hydroxysilane répondant à la formule générale (I) :

(HO)ₐR₍₃₋ₐ₎Si-R'-Sₓ₋R'-SiR_{(3-b)}(OH)_{b} (I)

dans laquelle les radicaux R, identiques ou différents, sont des groupes hydrocarbonés comportant de préférence de 1 à 15 atomes de carbone; les radicaux R', identiques ou différents, sont des groupes de liaison divalents comportant de préférence de 1 à 18 atomes de carbone; a et b, identiques ou différents, sont égaux à 1 ou 2; x est un nombre supérieur ou égal à 2, et une amine primaire de formule (IV):

R-NH₂ (IV)

dans laquelle R représente un groupement hydrocarboné linéaire ou ramifié comprenant de 8 à 24 atomes de carbone, ladite composition étant dépourvue ou comprenant moins de 0,5 pce de dérivé guanidique.

Par l'expression «composition à base de» il faut entendre une composition comportant le mélange et/ou le produit de réaction in situ des différents constituants de base utilisés, certains de ces constituants pouvant réagir et/ou étant destinés à réagir entre eux, au moins partiellement, lors des différentes phases de fabrication de la composition, ou lors de la cuisson ultérieure, modifiant la composition telle qu'elle est préparée au départ. Ainsi les compositions telles que mises en oeuvre pour l'invention peuvent être différentes à l'état non réticulé et à l'état réticulé.

Dans la présente description, sauf indication expresse différente, tous les pourcentages (%) indiqués sont des pourcentages en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### I-1 Elastomère diénique

Les compositions peuvent contenir un seul élastomère diénique ou un mélange de plusieurs élastomères diéniques.

Par élastomère (ou « caoutchouc », les deux termes étant considérés comme synonymes) du type "diénique", on rappelle ici que doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Les élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles); c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions selon l'invention:
(a) tout homopolymère obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone;
(c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, l'aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778, US 6 013 718 et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909, US 6 503 973, WO 2009/000750 et WO 2009/000752). Comme autres exemples d'élastomères fonctionnalisés, on peut citer également des élastomères (tels que SBR, BR, NR ou IR) du type époxydés.

Ces élastomères fonctionnalisés peuvent être utilisés en coupage entre eux ou avec des élastomères non fonctionnalisés. Par exemple, on peut utiliser un élastomère fonctionnalisé silanol ou polysiloxane ayant une extrémité silanol, en mélange avec un élastomère couplés et/ou étoilés à l'étain (décrit dans WO 11/042507), ce dernier représentant un taux compris de 5 à 50%, par exemple de 25 à 50%.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et -70°C et plus particulièrement entre -10°C et -60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de -40°C à -80°C, les copolymères isoprène-styrène et notamment ceux ayant une teneur en styrène comprise entre 5% et 50% en poids et une Tg comprise entre -5°C et -60°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre -20°C et -70°C.

En résumé, l'élastomère diénique de la composition est choisi préférentiellement dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR), les copolymères de butadiène-acrylonitrile (NBR), les copolymères de butadiène-styrène-acrylonitrile (NSBR) ou un mélange de deux ou plus de ces composés.

Selon un mode de réalisation particulier, la composition comporte de 50 à 100 pce d'un élastomère SBR, qu'il s'agisse d'un SBR préparé en émulsion ("ESBR") ou d'un SBR préparé en solution ("SSBR").

Selon un autre mode particulier de réalisation, l'élastomère diénique est un coupage (mélange) SBR/BR.

Selon d'autres modes de réalisation possibles, l'élastomère diénique est un coupage SBR/NR (ou SBR/IR), BR/NR (ou BR/IR), ou encore SBR/BR/NR (ou SBR/BR/IR).

Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre -10°C et -55°C ; un tel SBR peut être avantageusement utilisé en mélange avec un BR possédant de préférence plus de 90% (% molaire) de liaisons cis-1,4.

Selon un autre mode de réalisation particulier, l'élastomère diénique est un élastomère majoritairement isoprénique (c'est-à-dire dont la fraction massique d'élastomère isoprénique est la plus grande, comparée à la fraction massique des autres élastomères). Par "élastomère isoprénique", on entend de manière connue un homopolymère ou un copolymère d'isoprène, en d'autres termes un élastomère diénique choisi dans le groupe constitué par le caoutchouc naturel (NR) qui peut être plastifié ou peptisé, les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Préférentiellement, selon un autre mode de réalisation, la composition de caoutchouc comprend de façon majoritaire (c'est-à-dire avec le taux massique le plus élevé), un élastomère diénique non isoprénique. Par « élastomère diénique non isoprénique », doit être compris au sens de la présente demande un élastomère issu au moins en partie (i.e., un homopolymère ou un copolymère) de monomères diènes (monomères porteurs de deux doubles liaisons carbone-carbone) autres que l'isoprène. Ainsi, les élastomères diéniques non isopréniques au sens de la présente définition, comprennent donc également des copolymères comprenant de l'isoprène à titre de co-monomère. Le caoutchouc naturel et les homopolymères isopréniques (c'est-à-dire constitués de monomères isoprène fonctionnalisés ou non) sont exclus de la présente définition. Selon ce mode préférentiel de réalisation, tous les élastomères cités précédemment à l'exception du caoutchouc naturel et des polyisoprènes conviennent à titre d'élastomère diénique non isoprénique. Notamment, on pourra utiliser les élastomères diéniques non isopréniques choisis préférentiellement dans le groupe des élastomères diéniques fortement insaturés constitué par les polybutadiènes (en abrégé "BR"), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR). Toujours selon ce mode de réalisation préférentiel, on comprendra qu'en cas de coupage d'élastomères, le taux total des élastomères dits « non isopréniques » doit être supérieur au taux total des élastomères choisis dans le groupe constitué par le caoutchouc naturel, les polyisoprènes de synthèse et leurs mélanges. Préférentiellement selon ce mode de réalisation, le taux d'élastomère diénique non isoprénique est de plus de 50 pce, plus préférentiellement d'au moins 60 pce, de manière plus préférentielle d'au moins 70 pce, plus préférentiellement encore d'au moins 80 pce et de manière très préférentielle d'au moins 90 pce. En particulier selon ce mode de réalisation, le taux d'élastomère diénique non isoprénique est très préférentiellement de 100 pce.

Selon un autre mode préférentiel de réalisation de l'invention, la composition de caoutchouc comprend un coupage d'un (un ou plusieurs) élastomère diénique dit "à haute Tg" présentant une Tg comprise entre -70°C et 0°C et d'un (un ou plusieurs) élastomère diénique dit "à basse Tg" comprise entre -110°C et -80°C, plus préférentiellement entre -105°C et -90°C. L'élastomère à haute Tg est choisi de préférence dans le groupe constitué par les S-SBR, les E-SBR, le caoutchouc naturel, les polyisoprènes de synthèse (présentant un taux (% molaire) d'enchaînements cis-1,4 de préférence supérieur à 95%), les BIR, les SIR, les SBIR, et les mélanges de ces élastomères. L'élastomère à basse Tg comprend de préférence des unités butadiène selon un taux (% molaire) au moins égal à 70% ; il consiste de préférence en un polybutadiène (BR) présentant un taux (% molaire) d'enchaînements cis-1,4 supérieur à 90%.

Selon un autre mode particulier de réalisation de l'invention, la composition de caoutchouc comprend par exemple entre 30 et 90 pce, en particulier entre 40 et 90 pce, d'un élastomère à haute Tg en coupage avec un élastomère à basse Tg.

Selon un autre mode particulier de réalisation de l'invention, l'élastomère diénique de la composition selon l'invention comprend un coupage d'un BR (à titre d'élastomère basse Tg) présentant un taux (% molaire) d'enchaînements cis-1,4 supérieur à 90%, avec un ou plusieurs S-SBR ou E-SBR (à titre d'élastomère(s) haute Tg).

### I-2 Charge renforçante

La composition selon l'invention comprend au moins une charge inorganique renforçante telle que de la silice, de l'alumine, ou encore un coupage de ces deux types de charge. En complément, la composition peut comprendre tout type de charge renforçante connue pour ses capacités à renforcer une composition de caoutchouc utilisable pour la fabrication de pneumatiques, par exemple une charge organique tel que du noir de carbone.

Comme noirs de carbone conviennent tous les noirs de carbone, notamment les noirs dits de grade pneumatique. Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

La composition peut contenir un type de silice ou un coupage de plusieurs silices. La silice utilisée peut être toute silice renforçante connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g. A titres de silices précipitées hautement dispersibles (dites "HDS"), on citera par exemple les silices « Ultrasil 7000 » et « Ultrasil 7005 » de la société Evonik, les silices « Zeosil » 1165MP, 1135MP et 1115MP de la société Rhodia, la silice « Hi-Sil EZ150G» de la société PPG, les silices « Zeopol » 8715, 8745 et 8755 de la Société Huber, des silices précipitées traitées telles que par exemple les silices "dopées" à l'aluminium décrites dans la demande EP-A-0735088 ou les silices à haute surface spécifique telles que décrites dans la demande WO 03/16837.

La silice a de préférence une surface BET comprise entre 45 et 400 m2/g, plus préférentiellement comprise entre 60 et 300 m2/g.

L'homme du métier comprendra qu'à titre de charge équivalente de la silice décrite dans le présent paragraphe, pourrait être utilisée une charge renforçante d'une autre nature, notamment organique, dès lors que cette charge renforçante serait recouverte d'une couche de silice, ou bien comporterait à sa surface des sites fonctionnels, notamment hydroxyles, nécessitant l'utilisation d'un agent de couplage pour établir la liaison entre la charge et l'élastomère.

L'état physique sous lequel se présente la charge renforçante est indifférent, que ce soit sous forme de poudre, de microperles, de granulés, de billes ou toute autre forme densifiée appropriée.

Pour les besoins de l'invention, le taux de charge inorganique (préférentiellement la silice) est de 50 à 160 pce, plus préférentiellement de 60 à 150 pce et de manière très préférentielle, de 60 à 140 pce. En dessous de 50 pce de charge inorganique, la composition pourrait être moins performante en adhérence sur sol sec et mouillé tandis qu'au-dessus de 160 pce, la composition pourrait être moins performante en résistance au roulement.

Par charge renforçante majoritaire, on entend celle qui présente le plus fort taux parmi les charges renforçantes présentes dans la composition. Notamment, on entend par charge renforçante majoritaire toute charge renforçante qui représente au moins 50% en poids des charges renforçantes présentes, préférentiellement plus de 50% et plus préférentiellement plus de 60%.

Selon un mode de réalisation, la composition comprend de la silice comme charge majoritaire, en coupage éventuel avec du noir de carbone, comme charge minoritaire. Dans ce cas, le taux de silice est préférentiellement compris dans un domaine allant de 50 à 150 pce, de préférence de 60 à 150 pce. Le taux de noir est préférentiellement compris entre 0 et 50 pce, de préférence compris dans un domaine allant de 1 à 30 pce. Dans ce mode de réalisation, le taux de noir est préférentiellement compris dans un domaine allant de 1 à 5 pce et préférentiellement inférieur ou égal à 4 pce.

### I-3 Agent de couplage

Les compositions de l'invention comprennent un agent de couplage des charges inorganiques avec la matrice élastomérique susceptibles de manière connue, grâce à une liaison entre la matrice élastomérique et la charge inorganique renforçante, de permettre une amélioration de la dispersion de la charge dans la matrice de caoutchouc et un abaissement de la viscosité des compositions, d'améliorer leur faculté de mise en oeuvre à l'état cru. Pour les besoins de l'invention, l'agent de couplage comprend un polysulfure d'hydroxysilane, éventuellement additionné d'autres agents de couplages connues de l'homme du métier. Des polysulfures d'hydroxysilane sont décrits dans les demandes de brevet WO 02/30939 (ou US 6,774,255) et WO 02/31041 (ou US 2004/051210).

En particulier, et de manière préférentielle, l'agent de couplage peut être un polysulfure d'hydroxysilane (tel que décrit dans les documents cités ci-dessus) répondant à la formule générale (I):

(HO)aR(3-a)Si-R'-Sx-R'-SiR(3-b)(OH)b (I)

dans laquelle :
- les radicaux R, identiques ou différents, sont des groupes hydrocarbonés comportant de préférence de 1 à 15 atomes de carbone;
- les radicaux R', identiques ou différents, sont des groupes de liaison divalents comportant de préférence de 1 à 18 atomes de carbone;
- a et b, identiques ou différents, sont égaux à 1 ou 2;
- x est un nombre supérieur ou égal à 2.

Les radicaux R, identiques ou différents, linéaires ou ramifiés, comportant de préférence de 1 à 15 atomes de carbone, sont plus préférentiellement choisis parmi les alkyles, cycloalkyles ou aryles, en particulier parmi les alkyles en C1-C6, les cycloalkyles en C5-C8 et le radical phényle. Parmi ces radicaux, on citera notamment, à titre d'exemples, ceux choisis dans le groupe constitué par méthyle, éthyle, n-propyle, iso-propyle, n-butyle, sec-butyle, tert-butyle, n-pentyle, néopentyle, n-hexyle, 2-éthylhexyle, n-octyle, iso-octyle, cyclopentyle, cyclohexyle, 2-méthylcyclohexyle, phényle, toluyle, benzyle.

Plus préférentiellement encore, les radicaux R, identiques ou différents, sont des alkyles en C1-C3 (à savoir méthyle, éthyle, n-propyle, iso-propyle), tout particulièrement choisis parmi méthyle et éthyle.

Les radicaux R', identiques ou différents, substitués ou non substitués, sont de préférence des radicaux hydrocarbonés, saturés ou non saturés, comportant de 1 à 18 atomes de carbone, ces radicaux R' pouvant être interrompus au sein de la chaîne hydrocarbonée par au moins un hétéroatome tel que O, S ou N. Conviennent notamment des groupements alkylène en C1-C18 ou des groupements arylène en C6-C12, plus particulièrement des alkylènes en C1-C10, notamment en C1-C4, en particulier ceux choisis parmi méthylène, éthylène et propylène.

De préférence dans les polysulfures d'hydroxysilane répondant à la formule générale (I), l'hydroxysilane est un mono-hydroxysilane c'est-à-dire que a et b sont égaux à 1. De préférence également, les radicaux R sont choisis parmi les alkyles linéaires ou ramifiés en C1-C6, les cycloalkyles en C5-C8 ou un radical phényle ; les radicaux R' sont choisis parmi les alkylènes en C1-C18 ou les arylènes en C6-C12, et plus particulièrement, les radicaux R sont choisis parmi les alkyles en C1-C6 et les radicaux R' parmi les alkylènes en C1-C10.

Ainsi, de manière très préférentielle, l'hydroxysilane est un polysulfure de mono-hydroxysilane de formule (II): 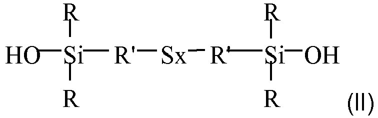 dans laquelle les radicaux R sont des alkyles en C1-C3, de préférence le méthyle ; les radicaux R' des alkylènes en C1-C4, de préférence méthylène, éthylène ou propylène ; x est supérieur ou égal à 2. Plus particulièrement, l'hydroxysilane peut être un polysulfure de bis- (propyldiméthylsilanol) de formule particulière (III):

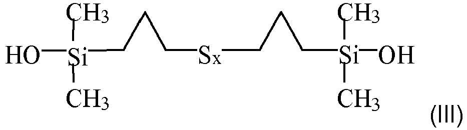

Ce produit de formule (III) correspond au produit D dans le document précédemment cité WO 02/31041 (ou US 2004/051210).

Dans les compositions de caoutchouc conformes à l'invention, la teneur en agent de couplage est préférentiellement comprise entre 2 et 15 pce, plus préférentiellement entre 3 et 13 et encore plus préférentiellement entre 5 et 10 pce.

### I-4 Système de vulcanisation

Le système de vulcanisation proprement dit est à base de soufre (ou d'un agent donneur de soufre) et d'un accélérateur de vulcanisation. A ce système de vulcanisation de base peuvent venir s'ajouter, incorporés au cours de la première phase non-productive et/ou au cours de la phase productive telles que décrites ultérieurement, divers accélérateurs secondaires ou activateurs de vulcanisation connus.

Le soufre est utilisé à un taux préférentiel compris entre 0,5 et 10 pce, plus préférentiellement compris entre 0,5 et 5 pce, en particulier entre 0,5 et 3 pce lorsque la composition de l'invention est destinée, selon un mode préférentiel de l'invention, à constituer une bande de roulement de pneumatique.

Le système de vulcanisation de la composition selon l'invention comprend un accélérateur un ou plusieurs accélérateurs de vulcanisation, par exemple les composés de la famille des thiurames, les dérivés dithiocarbamates de zinc, les sulfénamides, les guanidines ou les thiophosphates. On peut utiliser en particulier tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-tert-butyl-2-benzothiazyle sulfénamide (en abrégé "TBBS"), N-tert-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

Le système de vulcanisation de la composition selon l'invention peut également comprendre un ou plusieurs accélérateurs ou activateurs additionnels, par exemple les composés de la famille des thiurames, les dérivés dithiocarbamates de zinc, les sulfénamides, les guanidines (à condition d'en contenir moins de 0,5 pce) ou les thiophosphates.

En revanche, dans les pneumatiques selon l'invention, la composition nécessaire aux besoins de l'invention est dépourvue de dérivé guanidique ou en contient moins de 0,5 pce. Préférentiellement, la composition est soit totalement dépourvue de tels composés, soit qu'elle en contient moins de 0,45 pce, de préférence moins de 0,4 pce, plus préférentiellement moins de 0,3 pce, de manière préférentielle moins de 0,2 pce et très préférentiellement moins de 0,1 pce. Par « dérivé guanidique » on entend les composés organiques portant comme fonction principale une fonction guanidine, tels que ceux connus dans les compositions de pneumatique notamment comme accélérateurs de vulcanisation, par exemple la diphénylguanidine (DPG) ou la diorthotolylguanidine (DOTG).

Selon un mode préférentiel, dans le pneumatique selon l'invention, la composition nécessaire aux besoins de l'invention est également dépourvue de zinc ou en contient moins de 0,5 pce, préférentiellement moins de 0,3 pce, plus préférentiellement moins de 0,2 pce et très préférentiellement moins de 0,1 pce.

### I-5 Amine primaire

Afin de remplacer avantageusement les dérivés guanidiques évoqués ci-dessus, le pneumatique selon l'invention comprend une amine primaire de formule (IV) :

R-NH2 (IV)

dans laquelle R représente un groupement hydrocarboné linéaire ou ramifié comprenant de 8 à 24 atomes de carbone.

Préférentiellement, R représente un groupement hydrocarboné linéaire ou ramifié comprenant de 10 à 22 atomes de carbone, plus préférentiellement de 12 à 20 atomes de carbone et très préférentiellement de 14 à 20 atomes de carbone. Préférentiellement, R représente un groupement hydrocarboné linéaire.

Par groupement hydrocarboné, on entend au sens de la présente invention, un groupement comportant des atomes de carbone et d'hydrogène, saturé ou insaturé, tel qu'un groupement alkyle ou alkényle. De manière préférentielle, le groupement hydrocarboné comporte de 0 à 3 insaturations, préférentiellement, 0, 1 ou 2.

De manière préférentielle, le groupement hydrocarboné est saturé, il s'agit d'onc d'un groupement alkyle.

Alternativement, et préférentiellement également, ce groupement hydrocarboné est insaturé, il s'agit donc d'un groupement alkényle.

Préférentiellement, l'amine primaire telle que définie ci-dessus peut être choisie parmi les alkylamines linéaires. De manière très préférentielle, il s'agit de l'hexadécylamine ou de l'octadécylamine, et notamment de l'octadécylamine.

L'octadécylamine (ou stéarylamine) est commercialement disponible, par exemple sous forme de poudre chez un fournisseur comme Aldrich.

Préférentiellement, le taux d'amine primaire dans la composition est compris dans un domaine variant de 0,2 à 8 pce, plus préférentiellement de 0,3 à 7 pce, de préférence de plus de 0,5 pce à 5 pce et plus préférentiellement de 0,6 à 4 pce.

On peut noter que l'amine primaire telle que définie ci-dessous est préférentiellement introduite sous forme de base libre, c'est-à-dire ne formant pas un sel avec un acide minéral ou organique.

### I-6 Système plastifiant

La composition selon l'invention comporte un système plastifiant. Ce système plastifiant est composé d'au moins une résine hydrocarbonée de faible Tg. En plus de cette résine de faible Tg, le système plastifiant de la composition peut comprendre de manière optionnelle une résine hydrocarbonée de haute Tg et/ou une huile plastifiante.

Le taux total de plastifiant dans la composition est supérieur ou égal à 5 pce, plus préférentiellement supérieur ou égal à 10 pce, de préférence de 10 à 120 pce, en particulier de 10 à 100 pce, par exemple de 15 à 90 pce. En dessous de 5 pce, et surtout en dessous de 10 pce de plastifiant, la composition pourrait être moins performante quant à la processabilité industrielle.

### 1-6-1 Résine de faible Tg

Le système plastifiant de la composition de l'invention comprend une résine hydrocarbonée visqueuse à 20 °C, dit à « faible Tg », c'est-à-dire qui par définition présente une Tg comprise dans un domaine allant de -40 °C à 20°C.

De préférence, la résine plastifiante hydrocarbonée de faible Tg présente au moins une quelconque des caractéristiques suivantes :
- une Tg comprise entre -40°C et 0°C, plus préférentiellement entre -30°C et 0°C et plus préférentiellement encore entre -20°C et 0°C ;
- une masse moléculaire moyenne en nombre (Mn) inférieure à 800 g/mol, de préférence inférieure à 600 g/mol et plus préférentiellement inférieure à 400 g/mol ;
- un point de ramollissement compris dans un domaine allant de 0 à 50°C, préférentiellement de 0 à 40°C, plus préférentiellement de 10 à 40°C, de préférence de 10 à 30°C ;
- un indice de polymolécularité (Ip) inférieur à 3, plus préférentiellement inférieur à 2 (rappel : Ip = Mw/Mn avec Mw masse moléculaire moyenne en poids).

Plus préférentiellement, cette résine plastifiante hydrocarbonée de faible Tg présente l'ensemble des caractéristiques préférentielles ci-dessus.

Le point de ramollissement est mesuré selon la norme ISO 4625 (méthode "Ring and Ball"). La Tg est mesurée selon la norme ASTM D3418 (1999). La macrostructure (Mw, Mn et Ip) de la résine hydrocarbonée est déterminée par chromatographie d'exclusion stérique (SEC) : solvant tétrahydrofurane ; température 35°C ; concentration 1 g/I ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Les résines hydrocarbonées thermoplastiques peuvent être aliphatiques, ou aromatiques ou encore du type aliphatique/ aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole).

A titre de monomères aromatiques conviennent par exemple le styrène, l'alpha-méthylstyrène, l'ortho-, méta-, para-méthylstyrène, le vinyle-toluène, le para-tertiobutylstyrène, les méthoxystyrènes, les chlorostyrènes, le vinylmésitylène, le divinylbenzène, le vinylnaphtalène, tout monomère vinylaromatique issu d'une coupe C9 (ou plus généralement d'une coupe C8 à C10). De préférence, le monomère vinylaromatique est du styrène ou un monomère vinylaromatique issu d'une coupe C9 (ou plus généralement d'une coupe C8 à C10). De préférence, le monomère vinylaromatique est le monomère minoritaire, exprimé en fraction molaire, dans le copolymère considéré.

Selon un mode de réalisation particulièrement préférentiel, la résine plastifiante hydrocarbonée est choisie dans le groupe constitué par les résines d'homopolymères ou copolymères de cyclopentadiène (en abrégé CPD) ou dicyclopentadiène (en abrégé DCPD), les résines d'homopolymères ou copolymères terpène, les résines d'homopolymères ou copolymères terpène phénol, les résines d'homopolymères ou copolymères de coupe C5, les résines d'homopolymères ou copolymères de coupe C9, et les mélanges de ces résines, utilisables seules ou en combinaison avec un plastifiant liquide, par exemple une huile MES ou TDAE. Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. Parmi les résines plastifiantes hydrocarbonées ci-dessus, on citera notamment les résines d'homo- ou copolymères d'alphapinène, betapinène, dipentène ou polylimonène.

Les résines préférentielles ci-dessus sont bien connues de l'homme du métier et disponibles commercialement, par exemple vendues en ce qui concerne les :
- résine aliphatique : par la société CRAY VALLEY sous la dénomination« Wingtack 10» (Mn=480 g/mol ; Mw=595 g/mol ; Ip=1.2 ; SP=10°C; Tg=-28°C),
- résines coumarone indène : par la société Rütgers Chemicals sous la dénomination « Novares C30 » (Mn=295 g/mol ; Mw=378 g/mol ; Ip=1.28 ; SP=25°C ; Tg=-19°C) ;
- résines de coupe C9 aliphatique et aromatique : par la société Rütgers Chemicals sous la dénomination « Novares TT30 » (Mn=329 g/mol ; Mw=434 g/mol ; Ip=1.32 ; SP=25°C ; Tg=-12°C).

Préférentiellement, le taux de résine plastifiante hydrocarbonée de faible Tg est supérieur ou égal à 5 pce, de préférence compris dans un domaine allant de 5 pce à 80 pce, préférentiellement de 7 à 75 pce, encore plus préférentiellement entre 10 et 50 pce. En effet, en dessous de 5 pce de résine de faible Tg, la composition pourrait présenter des problèmes de collant et donc de processabilité industrielle.

### I-6-2 Résine de haute Tg

Optionnellement, la combinaison de plastifiant peut contenir également une résine hydrocarbonée thermoplastique dont la Tg est supérieure à 20°C. Cette résine est un solide à température ambiante (23°C), par opposition à un composé plastifiant liquide tel qu'une huile ou visqueux tel qu'une résine de faible Tg.

De préférence, la résine plastifiante hydrocarbonée thermoplastique présente au moins une quelconque des caractéristiques suivantes :
- une Tg supérieure à 30°C ;
- une masse moléculaire moyenne en nombre (Mn) comprise entre 400 et 2000 g/mol, plus préférentiellement entre 500 et 1500 g/mol ;
- un indice de polymolécularité (Ip) inférieur à 3, plus préférentiellement inférieur à 2 (rappel : Ip = Mw/Mn avec Mw masse moléculaire moyenne en poids).

Plus préférentiellement, cette résine plastifiante hydrocarbonée thermoplastique présente l'ensemble des caractéristiques préférentielles ci-dessus.

La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Les résines hydrocarbonées thermoplastiques peuvent être aliphatiques, ou aromatiques ou encore du type aliphatique/ aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole).

A titre de monomères aromatiques conviennent par exemple le styrène, l'alpha-méthylstyrène, l'ortho-, méta-, para-méthylstyrène, le vinyle-toluène, le para-tertiobutylstyrène, les méthoxystyrènes, les chlorostyrènes, le vinylmésitylène, le divinylbenzène, le vinylnaphtalène, tout monomère vinylaromatique issu d'une coupe C9 (ou plus généralement d'une coupe C8 à C10). De préférence, le monomère vinylaromatique est du styrène ou un monomère vinylaromatique issu d'une coupe C9 (ou plus généralement d'une coupe C8 à C10). De préférence, le monomère vinylaromatique est le monomère minoritaire, exprimé en fraction molaire, dans le copolymère considéré.

Selon un mode de réalisation particulièrement préférentiel, la résine plastifiante hydrocarbonée est choisie dans le groupe constitué par les résines d'homopolymères ou copolymères de cyclopentadiène (en abrégé CPD) ou dicyclopentadiène (en abrégé DCPD), les résines d'homopolymères ou copolymères terpène, les résines d'homopolymères ou copolymères terpène phénol, les résines d'homopolymères ou copolymères de coupe C5, les résines d'homopolymères ou copolymères de coupe C9, les résines d'homopolymères et copolymères d'alpha-méthyl-styrène et les mélanges de ces résines, utilisables seules ou en combinaison avec un plastifiant liquide, par exemple une huile MES ou TDAE. Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. Parmi les résines plastifiantes hydrocarbonées ci-dessus, on citera notamment les résines d'homo- ou copolymères d'alphapinène, betapinène, dipentène ou polylimonène.

Les résines préférentielles ci-dessus sont bien connues de l'homme du métier et disponibles commercialement, par exemple vendues en ce qui concerne les :
- résines polylimonène : par la société DRT sous la dénomination "Dercolyte L120" (Mn=625 g/mol ; Mw=1010 g/mol ; Ip=1,6 ; Tg=72°C) ou par la société ARIZONA sous la dénomination "Sylvagum TR7125C" (Mn=630 g/mol ; Mw=950 g/mol ; Ip=1,5 ; Tg=70°C) ;
- résines de copolymère coupe C5/ vinylaromatique, notamment coupe C5/ styrène ou coupe C5/ coupe C9 : par Neville Chemical Company sous les dénominations "Super Nevtac 78", "Super Nevtac 85" ou "Super Nevtac 99", par Goodyear Chemicals sous dénomination "Wingtack Extra", par Kolon sous dénominations "Hikorez T1095" et "Hikorez T1100", par Exxon sous dénominations "Escorez 2101" et "Escorez 1273" ;
- résines de copolymère limonène/ styrène : par DRT sous dénomination "Dercolyte TS 105" de la société DRT, par ARIZONA Chemical Company sous dénominations "ZT115LT" et "ZT5100".

A titre d'exemples d'autres résines préférentielles, on peut citer également les résines alpha-méthyl-styrène modifiées phénol. Pour caractériser ces résines modifiées phénol, on rappelle qu'il est utilisé de manière connue un indice dit "indice hydroxyle" (mesuré selon norme ISO 4326 et exprimé en mg KOH/g). Les résines alpha-méthyl-styrène, notamment celles modifiées phénol, sont bien connues de l'homme du métier et disponibles commercialement, par exemple vendues par la société Arizona Chemical sous les dénominations "Sylvares SA 100" (Mn = 660 g/mol ; Ip = 1,5 ; Tg = 53°C) ; "Sylvares SA 120" (Mn = 1030 g/mol ; Ip = 1,9 ; Tg = 64°C) ; "Sylvares 540" (Mn = 620 g/mol ; Ip = 1,3 ; Tg = 36°C ; indice d'hydroxyle = 56 mg KOH/g) ; "Silvares 600" (Mn = 850 g/mol ; Ip = 1,4 ; Tg = 50°C ; indice d'hydroxyle = 31 mg KOH/g).

Selon un mode particulier de réalisation de l'invention, lorsqu'elle est incluse dans la composition, le taux de résine plastifiante hydrocarbonée de Tg supérieure à 20°C est compris dans un domaine allant de 5 à 50 pce, préférentiellement allant de 5 à 40 pce, encore plus préférentiellement de 10 à 40 pce.

### I-6-3 Huile plastifiante

Optionnellement, la combinaison de plastifiant peut contenir également une huile d'extension (ou résine plastifiante) liquide à 20 °C, dit à « basse Tg », c'est-à-dire qui par définition présente une Tg inférieure à -20 °C, de préférence inférieure à -40 °C.

Toute huile d'extension, qu'elle soit de nature aromatique ou non-aromatique connue pour ses propriétés plastifiantes vis-à-vis d'élastomères diéniques, est utilisable. A température ambiante (20°C), ces huiles, plus ou moins visqueuses, sont des liquides (c'est-à-dire, pour rappel, des substances ayant la capacité de prendre à terme la forme de leur contenant), par opposition notamment à des résines plastifiantes hydrocarbonées qui sont par nature solides à température ambiante.

Conviennent particulièrement les huiles d'extension choisies dans le groupe constitué par les huiles naphténiques (à basse ou haute viscosité, notamment hydrogénées ou non), les huiles paraffiniques, les huiles MES (Médium Extracted Solvates), les huiles TDAE (Treated Distillate Aromatic Extracts), les huiles minérales, les huiles végétales, les plastifiants éthers, les plastifiants esters, les plastifiants phosphates, les plastifiants sulfonates et les mélanges de ces composés. Par exemple, on peut citer ceux qui contiennent entre 12 et 30 atomes de carbone, par exemple le trioctyle phosphate. A titre d'exemples de plastifiants esters non aqueux et non hydrosolubles, on peut citer notamment les composés choisis dans le groupe constitué par les trimellitates, les pyromellitates, les phtalates, les 1,2-cyclohexane dicarboxylates, les adipates, les azélaates, les sébacates, les triesters de glycérol et les mélanges de ces composés. Parmi les triesters ci-dessus, on peut citer notamment des triesters de glycérol, de préférence constitués majoritairement (pour plus de 50 %, plus préférentiellement pour plus de 80 % en poids) d'un acide gras insaturé en C18, c'est-à-dire choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238, à titre d'agents plastifiants dans des bandes de roulement pour pneumatiques.

Selon un mode particulier de réalisation de l'invention, lorsqu'elle est incluse dans la composition le taux d'huile d'extension est compris entre 2 et 80 pce, plus préférentiellement entre 5 et 60 pce, encore plus préférentiellement entre 10 et 50 pce. En dessous de 2 pce d'huile ou au-dessus de 80 pce d'huile, la composition pourrait être moins performante en adhérence sur sol mouillé, de par une Tg du mélange trop haute ou trop basse.

### I-7 Rapport des taux de charge et de plastifiant

De manière préférentielle pour les besoins de l'invention, les taux de charge renforçante et de plastifiant sont tels que le rapport du taux total de charge et du taux total de plastifiant est compris dans un domaine allant de 1,5 à 5. En dessous de 1,5 la composition pourrait présenter une moindre dureté entrainant une moindre performance de comportement véhicule tandis qu'au-dessus de 5 la composition pourrait présenter un fort mooney entrainant une moindre processabilité industrielle.

De préférence, le rapport du taux total de charge et du taux total de plastifiant est compris dans un domaine allant de 1,6 à 4,5 et de préférence de 1,7 à 2,5.

### I-8 Autres additifs possibles

Les compositions de caoutchouc conformes à l'invention comportent optionnellement également tout ou partie des additifs usuels habituellement utilisés dans les compositions d'élastomères destinées notamment à la fabrication de bandes de roulement, comme par exemple des pigments, des agents de protection tels que cires anti-ozone, anti-ozonants chimiques, anti-oxydants, des agents plastifiants autres que ceux précédemment décrits, des agents anti-fatigue, des résines renforçantes, des accepteurs (par exemple résine phénolique novolaque) ou des donneurs de méthylène (par exemple HMT ou H3M).

Bien entendu, les compositions conformes à l'invention peuvent être utilisées seules ou en coupage (i.e., en mélange) avec toute autre composition de caoutchouc utilisable pour la fabrication de pneumatiques.

Il va de soi que l'invention concerne les compositions de caoutchouc précédemment décrites tant à l'état dit "cru" ou non réticulé (i.e., avant cuisson) qu'à l'état dit "cuit" ou réticulé, ou encore vulcanisé (i.e., après réticulation ou vulcanisation).

### II- Préparation des compositions de caoutchouc

Les compositions sont fabriquées dans des mélangeurs appropriés, en utilisant deux phases de préparation successives bien connues de l'homme du métier: une première phase de travail ou malaxage thermo-mécanique (parfois qualifiée de phase "non-productive") à haute température, jusqu'à une température maximale comprise entre 110°C et 190°C, de préférence entre 130°C et 180°C, suivie d'une deuxième phase de travail mécanique (parfois qualifiée de phase "productive") à plus basse température, typiquement inférieure à 110°C, par exemple entre 60°C et 100°C, phase de finition au cours de laquelle est incorporé le système de réticulation ou vulcanisation; de telles phases ont été décrites par exemple dans les demandes EP-A-0501227, EP-A-0735088, EP-A-0810258, WO00/05300 ou WO00/05301.

La première phase (non-productive) est conduite préférentiellement en plusieurs étapes thermomécaniques. Au cours d'une première étape on introduit, dans un mélangeur approprié tel qu'un mélangeur interne usuel, les élastomères, les charges renforçantes, la combinaison de plastifiants (et éventuellement les agents de couplage et/ou d'autres ingrédients à l'exception du système de vulcanisation), à une température comprise entre 20°C et 100°C et, de préférence, entre 25°C et 100°C. Après quelques minutes, préférentiellement de 0,5 à 2 min et une montée de la température à 90°C à 100°C, les autres ingrédients (c'est-à-dire, ceux qui restent si tous n'ont pas été mis au départ) sont ajoutés en une fois ou par parties, à l'exception du système de vulcanisation durant un mélangeage allant de 20 secondes à quelques minutes. La durée totale du malaxage, dans cette phase non-productive, est de préférence comprise entre 2 et 10 minutes à une température inférieure ou égale à 180°C, et préférentiellement inférieure ou égale à 170°C.

Après refroidissement du mélange ainsi obtenu, on incorpore alors le système de vulcanisation à basse température (typiquement inférieure à 100°C), généralement dans un mélangeur externe tel qu'un mélangeur à cylindres; le tout est alors mélangé (phase productive) pendant quelques minutes, par exemple entre 5 et 15 min.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis afin d'obtenir des produits tels qu'une bande de roulement. Ces produits peuvent ensuite être utilisés pour la fabrication de pneumatiques, selon les techniques connues de l'homme du métier.

La vulcanisation (ou cuisson) est conduite de manière connue à une température généralement comprise entre 130°C et 200°C, sous pression, pendant un temps suffisant qui peut varier par exemple entre 5 et 90 min en fonction notamment de la température de cuisson, du système de vulcanisation adopté, de la cinétique de vulcanisation de la composition considérée ou encore de la taille du pneumatique.

Les exemples qui suivent illustrent l'invention sans toutefois la limiter.

### III- Exemples de réalisation de l'invention

### 111-1 Préparation des exemples

Dans les exemples qui suivent les compositions caoutchouteuses ont été réalisées comme décrit précédemment.

### III-2 Caractérisation des exemples

Dans les exemples, les compositions de caoutchouc sont caractérisées avant et/ou après cuisson comme indiqué ci-après.

### - Viscosité Mooney ou Plasticité Mooney (avant cuisson):

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM=0,83 Newton.mètre). Plus la valeur de Mooney est basse, plus la viscosité avant cuisson est faible et meilleure est la processabilité de la composition.

### - Propriétés dynamiques (après cuisson):

Les propriétés dynamiques G* et tan(δ)max sont mesurées sur un viscoanalyseur (Metravib V A4000), selon la norme ASTM D 5992 - 96. On enregistre la réponse d'un échantillon de composition vulcanisée (éprouvette cylindrique de 4 mm d'épaisseur et de 400 mm2 de section), soumis à une sollicitation sinusoïdale en cisaillement simple alterné, à la fréquence de 10Hz, à 23°C, selon la norme ASTM D 1349 - 99. On effectue un balayage en amplitude de déformation crête à crête de 0,1 à 50% (cycle aller), puis de 50% à 1 % (cycle retour). Les résultats exploités sont le module complexe de cisaillement dynamique (G*) et le facteur de perte (tan δ). Pour le cycle retour, on indique la valeur maximale de tan δ observée (tan(δ)max), ainsi que l'écart de module complexe (ΔG*) entre les valeurs à 0,1% et à 50% de déformation (effet Payne). Pour la valeur de tan(δ)max à 23°C, plus la valeur est basse, plus la composition aura une hystérèse faible et donc un résistance au roulement faible.

### III-3 Exemples

Les compositions sont fabriquées avec une introduction de l'ensemble des constituants sur un mélangeur interne, à l'exception du système de vulcanisation. Les agents de vulcanisation (soufre et accélérateur) sont introduits sur un mélangeur externe à basse température (les cylindres constitutifs du mélangeur étant à environ 30°C).

Les exemples présentés dans le tableau 1 ont pour objet de comparer les différentes propriétés de caoutchouterie de compositions témoins (T1 à T4) aux compositions C1 et C2 conformes à l'invention. Les résultats de mesure des propriétés mesurées avant et après cuisson sont présentés au tableau 2.

**Tableau 1**

| | **T1** | **T2** | **C1** | **T4** | **T3** | **C2** |
|---|---|---|---|---|---|---|
| SBR (1) | 100 | 100 | 100 | 100 | 100 | 100 |
| Noir de carbone (2) | 3 | 3 | 3 | 3 | 3 | 3 |
| Silice (3) | 105 | 105 | 105 | 105 | 105 | 105 |
| Résine haute Tg (4) | 34 | 0 | 0 | 20,75 | 20,75 | 20,75 |
| Résine faible Tg (5) | 0 | 41,5 | 41,5 | 20,75 | 20,75 | 20,75 |
| Huile (6) | 12 | 12 | 12 | 12 | 12 | 12 |
| Agent de couplage 1 (7) | 0 | 8,4 | 0 | 8,4 | 0 | 0 |
| Agent de couplage 2 (8) | 6,2 | 0 | 6.2 | 0 | 6.2 | 6.2 |
| DPG (9) | 0 | 0 | 0 | 1,9 | 1,9 | 0 |
| Octadécylamine | 2,2 | 2,2 | 2,2 | 0 | 0 | 2,2 |
| Antioxydant (10) | 3 | 3 | 3 | 3 | 3 | 3 |
| Cire anti-ozone | 2 | 2 | 2 | 2 | 2 | 2 |
| Acide stéarique | 3 | 3 | 3 | 3 | 3 | 3 |
| Soufre | 1 | 1 | 1 | 1 | 1 | 1 |
| Accélérateur (11) | 2 | 2 | 2 | 2 | 2 | 2 |

| | | | | | | |
|---|---|---|---|---|---|---|
| (1) SBR solution avec 26,5% de motif styrène et 50% de motif 1,2 de la partie butadiénique (Tg = -48°C) (2) Grade ASTM N234 (société Cabot) (3) Silice « Zeosil 1165 MP » de la société Rhodia type « HDS » (4) Résine hydrocarbonée de haute Tg C9/DCPD «Escorez 5600» de société EXXON (5) Résine hydrocarbonée de faible Tg « Novares C30 » de la société Rütgers Chemical (6) Trioléate de glycérol, huile de tournesol à 85% en poids d'acide oléique « Lubrirob Tod 1880 » de la société Novance (7) Agent de couplage 1 : TESPT (« Si69 » de la société Evonik - Degussa) (8) Agent de couplage 2 : polysulfure de bis- (propyldiméthylsilanol) tel que décrit dans le document WO 02/31041 (ou US 2004/051210) (9) Diphénylguanidine « Perkacit DPG » de la société Flexsys (10) N-(1,3-diméthylbutyl)-N'-phényl-p-phénylènediamine (Santoflex 6-PPD) de la société Flexsys (11) N-cyclohexyl-2-benzothiazol-sulfénamide (« Santocure CBS » de la société Flexsys) | | | | | | |

**Tableau 2**

| | **T1** | **T2** | **C1** | **T3** | **T4** | **C2** |
|---|---|---|---|---|---|---|
| Mooney (UM) | 50 | 57 | 50 | 61 | 55 | 51 |
| Tan(δ)max retour à 23°C | 0,37 | 0,30 | 0,30 | 0,36 | 0,35 | 0,33 |

Par rapport aux compositions témoins, on note que les compositions conformes à l'invention présentent le meilleur compromis de performances entre le Mooney, et la mesures de Tan(δ)max à 23°C. En effet toutes les compositions conformes à l'invention permettent d'améliorer au moins une propriété par rapport aux témoins pris séparément. Ces résultats montrent que les compositions de l'invention permettent de bonnes performances sur les aspects essentiels que sont la processabilité et la résistance au roulement. Aucune des compositions témoin ne permet un aussi bon compromis de ces deux performances à la fois.

## Revendications

1. Composition de caoutchouc à base d'au moins :
- un élastomère diénique,
- 50 à 160 pce (parties en poids pour cent parties en poids d'élastomère) de charge renforçante inorganique,
- un système de vulcanisation,
- un système plastifiant comprenant au moins une résine hydrocarbonée de température de transition vitreuse (Tg) comprise entre -40°C et 20°C,
- comme agent de couplage, un polysulfure d'hydroxysilane répondant à la formule générale (I) :
(HO)ₐR₍₃₋ₐ₎Si-R'-Sₓ₋R'-SiR_{(3-b)}(OH)_{b} (I)
dans laquelle les radicaux R, identiques ou différents, sont des groupes hydrocarbonés comportant de préférence de 1 à 15 atomes de carbone; les radicaux R', identiques ou différents, sont des groupes de liaison divalents comportant de préférence de 1 à 18 atomes de carbone; a et b, identiques ou différents, sont égaux à 1 ou 2; x est un nombre supérieur ou égal à 2,
- une amine primaire de formule (IV):
R-NH₂ (IV)
dans laquelle R représente un groupement hydrocarboné linéaire ou ramifié comprenant de 8 à 24 atomes de carbone, ladite composition étant dépourvue ou comprenant moins de 0,5 pce de dérivé guanidique.

2. Composition selon l'une quelconque des revendications précédentes dans laquelle le taux de charge renforçante inorganique est compris dans un domaine allant de 50 à 160 pce.

3. Composition selon l'une quelconque des revendications précédentes dans laquelle la charge renforçante inorganique est de la silice.

4. Composition selon l'une quelconque des revendications précédentes dans laquelle le taux d'agent de couplage est compris entre 2 et 15 pce, plus préférentiellement entre 3 et 13, mieux, entre 5 et 10 pce.

5. Composition selon l'une quelconque des revendications précédentes dans laquelle l'agent de couplage de formule (I) est un mono-hydroxysilane dans lequel a et b sont égaux à 1.

6. Composition selon l'une quelconque des revendications précédentes dans laquelle l'agent de couplage de formule (I) est tel que les radicaux R sont choisis parmi les alkyles en C1-C6, les cycloalkyles en C5-C8 ou un radical phényle ; les radicaux R' sont choisis parmi les alkylènes en C1-C18 ou les arylènes en C6-C12.

7. Composition selon l'une quelconque des revendications précédentes dans laquelle l'agent de couplage de formule (I) est tel que les radicaux R sont choisis parmi les alkyles en C1-C6 et les radicaux R' parmi les alkylènes en C1-C10.

8. Composition selon l'une quelconque des revendications précédentes dans laquelle l'agent de couplage de formule (I) est un polysulfure de mono-hydroxysilane de formule (II): 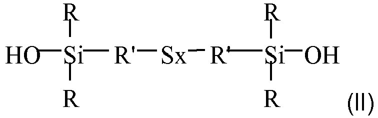 dans laquelle les radicaux R sont des alkyles en C₁-C₃, de préférence le méthyle ; les radicaux R' des alkylènes en C₁-C₄, de préférence méthylène, éthylène ou propylène ; x est supérieur ou égal à 2.

9. Composition selon l'une quelconque des revendications précédentes dans laquelle l'agent de couplage de formule (I) est un polysulfure de bis-(propyldiméthylsilanol) de formule particulière (III):

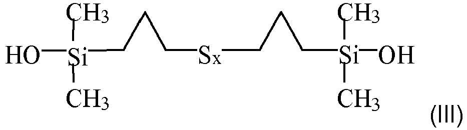

10. Composition selon l'une quelconque des revendications précédentes dans laquelle le taux d'amine primaire est de 0,2 à 8 pce, de préférence de plus de 0,3 pce à 7 pce.

11. Composition selon l'une quelconque des revendications précédentes dans laquelle l'amine primaire de formule (IV) porte un radical R qui représente un groupement hydrocarboné comprenant de 10 à 22 atomes de carbone.

12. Composition selon l'une quelconque des revendications précédentes dans laquelle l'amine primaire de formule (IV) porte un radical R qui représente un groupement alkyle ou un groupement alkényle.

13. Composition selon l'une quelconque des revendications précédentes, ladite composition étant dépourvue de zinc ou en contient moins de 0,5 pce, préférentiellement moins de 0,3 pce, plus préférentiellement moins de 0,2 pce et très préférentiellement moins de 0,1 pce.

14. Composition selon l'une quelconque des revendications précédentes dans laquelle le taux de résine hydrocarbonée de Tg comprise entre -40°C et 20°C est compris dans un domaine allant de 5 à 80 pce, de préférence de 7 à 75 pce.

15. Pneumatique comprenant une composition selon l'une quelconque des revendications 1 à 14.

## Patentansprüche

1. Kautschukzusammensetzung auf Basis von mindestens:
- einem Dienelastomer,
- 50 bis 160 phe (Gewichtsteile pro hundert Gewichtsteile Elastomer) anorganischem verstärkendem Füllstoff,
- einem Vulkanisationssystem,
- einem Weichmachersystem, umfassend mindestens ein Kohlenwasserstoffharz mit einer Glasübergangstemperatur (Tg) zwischen -40 °C und 20 °C,
- einem Hydroxysilanpolysulfid der allgemeinen Formel (I):
(HO)ₐR₍₃₋ₐ₎Si-R'-Sₓ-R'-SiR_{(3-b)}(OH)_{b} (I)
in der die Reste R gleich oder verschieden sind und für Kohlenwasserstoffgruppen mit vorzugsweise 1 bis 15 Kohlenstoffatomen stehen, die Reste R' gleich oder verschieden sind und für zweiwertige Verknüpfungsgruppen mit vorzugsweise 1 bis 18 Kohlenstoffatomen stehen, a und b gleich oder verschieden sind und gleich 1 oder 2 sind, x für eine ganze Zahl größer oder gleich 2 steht, als Kupplungsmittel,
- einem primären Amin der Formel (IV):
R-NH₂ (IV)
worin R für eine lineare oder verzweigte Kohlenwasserstoffgruppe mit 8 bis 24 Kohlenstoffatomen steht, wobei die Zusammensetzung frei von Guanidinderivat ist oder weniger als 0,5 phe Guanidinderivat umfasst.

2. Zusammensetzung nach einem der vorhergehenden Ansprüche, wobei der Gehalt an anorganischem verstärkendem Füllstoff in einem Bereich von 50 bis 160 phe liegt.

3. Zusammensetzung nach einem der vorhergehenden Ansprüche, wobei es sich bei dem anorganischen verstärkenden Füllstoff um Kieselsäure handelt.

4. Zusammensetzung nach einem der vorhergehenden Ansprüche, wobei der Gehalt an Kupplungsmittel zwischen 2 und 15 phe, weiter bevorzugt zwischen 3 und 13 und noch besser zwischen 5 und 10 phe liegt.

5. Zusammensetzung nach einem der vorhergehenden Ansprüche, wobei es sich bei dem Kupplungsmittel der Formel (I) um ein Monohydroxysilan handelt, in dem a und b gleich 1 sind.

6. Zusammensetzung nach einem der vorhergehenden Ansprüche, wobei das Kupplungsmittel der Formel (I) so beschaffen ist, dass die Reste R aus C1-C6-Alkylresten, C5-C8-Cycloalkylresten oder einem Phenylrest ausgewählt sind und die Reste R' aus C1-C18-Alkylenresten oder C6-C12-Arylenresten ausgewählt sind.

7. Zusammensetzung nach einem der vorhergehenden Ansprüche, wobei das Kupplungsmittel der Formel (I) so beschaffen ist, dass die Reste R aus C1-C6-Alkylresten und die Reste R' aus C1-C10-Alkylenresten ausgewählt sind.

8. Zusammensetzung nach einem der vorhergehenden Ansprüche, wobei es sich bei dem Kupplungsmittel der Formel (I) um ein Monohydroxysilanpolysulfid der Formel (II): 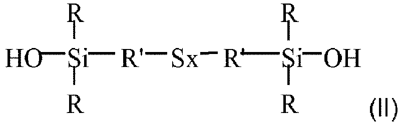 handelt, in der die Reste R für C₁-C₃-Alkylreste, vorzugsweise Methyl, stehen, die Reste R' für C₁-C₄-Alkylenreste, vorzugsweise Methylen, Ethylen oder Propylen, stehen, x größer oder gleich 2 ist.

9. Zusammensetzung nach einem der vorhergehenden Ansprüche, wobei es sich bei dem Kupplungsmittel der Formel (I) um ein Bis(propyldimethylsilanol)-polysulfid der speziellen Formel (III): 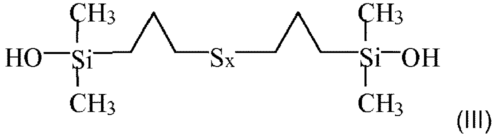 handelt.

10. Zusammensetzung nach einem der vorhergehenden Ansprüche, wobei der Gehalt an primärem Amin 0,2 bis 8 phe, vorzugsweise mehr als 0,3 phe bis 7 phe, beträgt.

11. Zusammensetzung nach einem der vorhergehenden Ansprüche, wobei das primäre Amin der Formel (IV) einen Rest R trägt, der für eine Kohlenwasserstoffgruppe mit 10 bis 22 Kohlenstoffatomen steht.

12. Zusammensetzung nach einem der vorhergehenden Ansprüche, wobei das primäre Amin der Formel (IV) einen Rest R trägt, der für eine Alkylgruppe oder eine Alkenylgruppe steht.

13. Zusammensetzung nach einem der vorhergehenden Ansprüche, wobei die Zusammensetzung frei von Zink ist oder weniger als 0,5 phe Zink, vorzugsweise weniger als 0,3 phe, weiter bevorzugt weniger als 0,2 phe und ganz besonders bevorzugt weniger als 0,1 phe Zink enthält.

14. Zusammensetzung nach einem der vorhergehenden Ansprüche, wobei der Gehalt an Kohlenwasserstoffharz mit einer Tg zwischen -40 °C und 20 °C in einem Bereich von 5 bis 80 phe, vorzugsweise 7 bis 75 phe, liegt.

15. Reifen, umfassend eine Zusammensetzung nach einem der Ansprüche 1 bis 14.

## Claims

1. Rubber composition based on at least:
- a diene elastomer,
- 50 to 160 phr (parts by weight per hundred parts by weight of elastomer) of inorganic reinforcing filler,
- a vulcanization system,
- a plasticizing system comprising at least one hydrocarbon resin with a glass transition temperature (Tg) of between -40°C and 20°C,
- as coupling agent, a hydroxysilane polysulfide corresponding to the general formula (I):
(HO)ₐR₍₃₋ₐ₎Si-R'-Sₓ₋R'-SiR_{(3-b)}(OH)_{b} (I)
in which the R radicals, which are identical or different, are hydrocarbon groups preferably comprising from 1 to 15 carbon atoms; the R' radicals, which are identical or different, are divalent connecting groups preferably comprising from 1 to 18 carbon atoms; a and b, which are identical or different, are equal to 1 or 2; x is a number greater than or equal to 2,
- a primary amine of formula (IV):
R-NH₂ (IV)
in which R represents a linear or branched hydrocarbon group comprising from 8 to 24 carbon atoms, said composition being devoid of or comprising less than 0.5 phr of guanidine derivative.

2. Composition according to any one of the preceding claims, in which the content of inorganic reinforcing filler is within a range extending from 50 to 160 phr.

3. Composition according to any one of the preceding claims, in which the inorganic reinforcing filler is silica.

4. Composition according to any one of the preceding claims, in which the content of coupling agent is between 2 and 15 phr, more preferentially between 3 and 13 phr, better still between 5 and 10 phr.

5. Composition according to any one of the preceding claims, in which the coupling agent of formula (I) is a monohydroxysilane in which a and b are equal to 1.

6. Composition according to any one of the preceding claims, in which the coupling agent of formula (I) is such that the R radicals are chosen from C1-C6 alkyls, C5-C8 cycloalkyls or a phenyl radical; the R' radicals are chosen from C1-C18 alkylenes or C6-C12 arylenes.

7. Composition according to any one of the preceding claims, in which the coupling agent of formula (I) is such that the R radicals are chosen from C1-C6 alkyls and the R' radicals from C1-C10 alkylenes.

8. Composition according to any one of the preceding claims, in which the coupling agent of formula (I) is a monohydroxysilane polysulfide of formula (II): 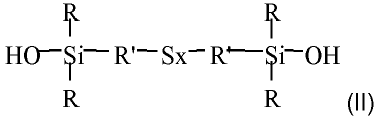 in which the R radicals are C₁-C₃ alkyls, preferably methyl; the R' radicals are C₁-C₄ alkylenes, preferably methylene, ethylene or propylene; x is greater than or equal to 2.

9. Composition according to any one of the preceding claims, in which the coupling agent of formula (I) is a bis(propyldimethylsilanol) polysulfide of specific formula (III):

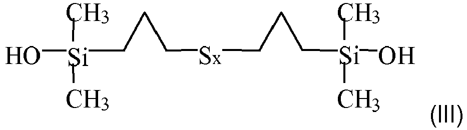

10. Composition according to any one of the preceding claims, in which the content of primary amine is from 0.2 to 8 phr, preferably from more than 0.3 phr to 7 phr.

11. Composition according to any one of the preceding claims, in which the primary amine of formula (IV) bears an R radical which represents a hydrocarbon group comprising from 10 to 22 carbon atoms.

12. Composition according to any one of the preceding claims, in which the primary amine of formula (IV) bears an R radical which represents an alkyl group or an alkenyl group.

13. Composition according to any one of the preceding claims, said composition being devoid of zinc or contains less than 0.5 phr, preferentially less than 0.3 phr, more preferentially less than 0.2 phr and very preferentially less than 0.1 phr thereof.

14. Composition according to any one of the preceding claims, in which the content of hydrocarbon resin with a Tg of between -40°C and 20°C is within a range extending from 5 to 80 phr, preferably from 7 to 75 phr.

15. Tyre comprising a composition according to any one of Claims 1 to 14.
